# FASCICULE DE BREVET EUROPEEN

(11) **EP 0 967 737 B1**
(45) Date de publication et mention de la délivrance du brevet: **03.08.2016**
(21) Numéro de dépôt: 99410080.8
(22) Date de dépôt: 18.06.1999
(51) Int. Cl.: H04B 3/54

(54) **Transmission de données numériques sur une ligne d'alimentation alternative**
Digitale Datenübertragung auf Wechselstrom Leitungen
Digital data transmission for AC power line

(30) Priorité: 22.06.1998 FR 9808024
(43) Date de publication de la demande: 29.12.1999
(73) Titulaire: STMicroelectronics S.A., 92120 Montrouge (FR)
(72) Inventeur: Wuidart, Luc, 83910 Pourrieres (FR); Bardouillet, Michel, 13790 Rouseet (FR)
(74) Mandataire: de Beaumont, Michel

(56) Documents cités:
- EP-A- 0 038 877
- WO-A-93/18568
- GB-A- 2 298 553

## Description

La présente invention concerne la transmission de données numériques sur une ligne d'alimentation alternative basse fréquence, par exemple, la tension du secteur de 50 Hz ou 60 Hz.

L'invention s'applique plus particulièrement à la transmission de données numériques entre un émetteur placé sur une ligne d'alimentation alternative dédiée à une charge et cette charge. Il s'agit, par exemple, de la ligne d'alimentation entre un interrupteur et une lampe (par exemple, un plafonnier), entre un interrupteur et une prise commandée, entre une centrale de commande et un ou plusieurs appareils électriques qu'elle commande en les alimentant et, plus généralement, entre tout dispositif de commande à distance et une charge à laquelle le dispositif de commande est relié par une ligne d'alimentation alternative basse fréquence.

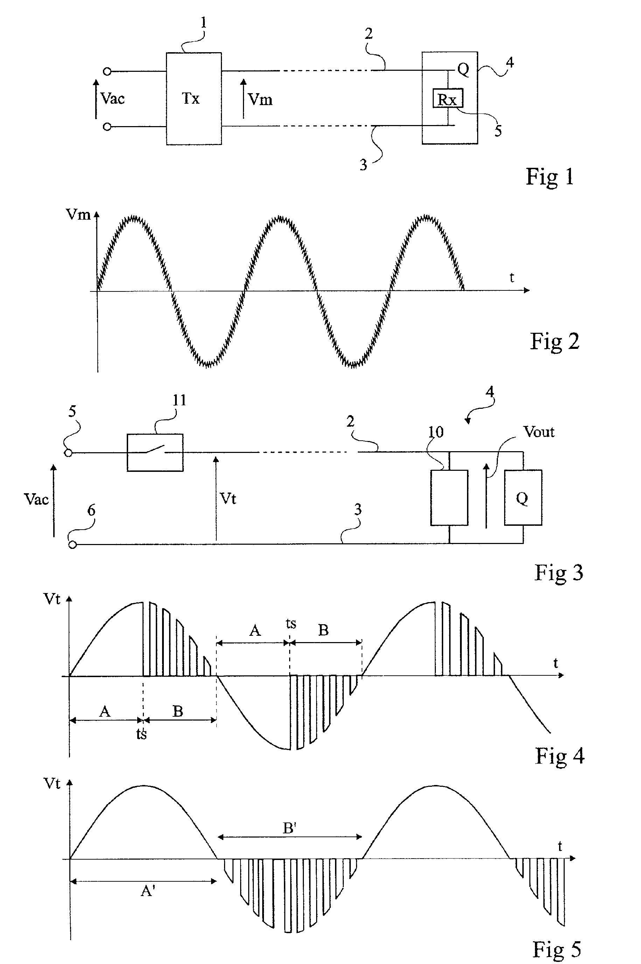

Les figures 1 et 2 illustrent une technique utilisée classiquement lorsqu'on souhaite transmettre une information numérique par une ligne d'alimentation alternative basse fréquence. Cette technique consiste à utiliser les principes dits de courant porteur, c'est-à-dire à utiliser la tension alternative d'alimentation comme support de transmission d'un signal basse tension que l'on superpose à la tension alternative.

La mise en oeuvre d'une telle solution nécessite (figure 1) un système 1 de modulation (Tx) propre à moduler la tension d'alimentation alternative Vac (par exemple, la tension du secteur) pour délivrer une tension alternative Vm (figure 2) sur la ligne (phase 2, neutre 3) d'alimentation à destination d'une charge (Q). Côté charge 4, on doit disposer d'un système 5 de démodulation propre à extraire le signal modulant du courant porteur.

La transmission d'informations numériques sur courant porteur présente des contraintes importantes qui conduisent à l'utilisation de systèmes d'émission/réception particulièrement complexes pour réussir à exploiter correctement les données numériques.

Tout d'abord, le système est tributaire de l'impédance de la ligne du réseau électrique. Du fait de la faible impédance des lignes électriques, les signaux transmis en modulation doivent présenter un niveau d'énergie le plus faible possible et sont, par conséquent, difficiles à récupérer côté récepteur.

De plus, la récupération des signaux de données nécessite un filtrage sélectif de manière à séparer les données de la tension alternative basse fréquence et de ses perturbations.

Dans certaines applications, les contraintes liées à la transmission de données par courant porteur conduisent à revenir à une solution encore antérieure qui consiste à utiliser une liaison supplémentaire dédiée à la transmission de données. Une telle liaison supplémentaire présente l'inconvénient évident de multiplier le nombre de fils conducteurs entre l'émetteur et le récepteur, et de ne pouvoir être utilisée dans une installation existante où seule une ligne bifilaire d'alimentation alternative relie l'émetteur à la charge.

Pour éviter une liaison supplémentaire dédiée, le document EP-A-0038877 prévoit d'isoler la ligne d'alimentation de la charge afin de rendre les conducteurs de cette ligne disponibles pour transmettre un autre signal que le signal d'alimentation. Un inconvénient est alors que l'alimentation est interrompue pendant toute la durée de la transmission d'information. De plus, il est nécessaire non seulement d'isoler la ligne de l'alimentation mais également d'y connecter, pendant les périodes d'émission, un émetteur générant le signal d'information et sa porteuse.

Une autre solution connue consiste à interrompre la ligne d'alimentation de la charge selon le codage linéaire d'une information à transmettre, chaque période de l'alimentation alternative contenant au plus 1 bit. Par exemple, le document WO-A-93/18568 prévoit d'interrompre la ligne pendant la moitié d'une alternance positive pour transmettre un "1", un "0" étant représenté par une période non modifiée de l'alimentation alternative. Le débit correspond à la fréquence de l'alimentation alternative. Une solution similaire est décrite dans le document GB-A-2298553 qui prévoit d'interrompre l'alimentation d'une lampe à chaque alternance positive (au plus une fois par alternance) de la tension d'alimentation alternative. Un inconvénient de ces solutions est, outre un très faible débit, qu'elles nuisent à l'alimentation de la charge qui ne reçoit alors plus d'alimentation pendant les périodes où elle doit prélever de l'énergie.

EP 0 018 334 décrit un système de transmission de données en utilisant la tension d'alimentation alternative comme enveloppe d'impulsions de fréquence supérieure et prévoit d'exploiter toutes les alternances de la tension d'alimentation pour une communication bidirectionnelle.

DE 196 32 282 décrit un procédé de transmission d'informations exploitant un signal d'alimentation alternatif dans lequel des impulsions à une fréquence supérieure à la fréquence de la tension d'alimentation alternative sont transmises en dehors de périodes d'alimentation de la charge.

La présente invention vise à proposer une nouvelle solution pour transmettre des données numériques sur une ligne d'alimentation alternative.

La présente invention vise notamment à proposer une transmission de données numériques qui puisse s'effectuer à l'aide d'émetteurs et de récepteurs de constitution particulièrement simple tout en préservant l'alimentation de la charge.

L'invention vise également à pallier aux inconvénients de niveaux des procédés classiques de transmission par modulation de courant porteur.

L'invention vise en outre à proposer une solution dont le débit de transmission ne soit pas lié à la fréquence d'alimentation de la charge et qui permette des débits supérieurs à ceux des solutions connues interrompant la ligne selon le codage des données à transmettre.

Une caractéristique de la présente invention est de dissocier temporellement, dans le signal alternatif, des périodes où la tension alternative doit alimenter la charge et des périodes où cette tension alternative n'est pas exploitée par la charge et peut donc être utilisée pour véhiculer des données numériques.

Ainsi, à l'inverse des procédés classiques qui consistent à superposer le signal de puissance et le signal de données, la présente invention prévoit de faire se succéder temporellement les périodes d'alimentation de la charge et les périodes de transmission de données.

Une autre caractéristique de la présente invention est d'utiliser la tension d'alimentation alternative comme signal d'enveloppe des données numériques pendant les périodes où celles-ci sont présentes.

Ainsi, l'invention prévoit de transférer périodiquement l'énergie nécessaire à l'alimentation de la charge et d'utiliser les périodes qui ne sont pas utilisées pour cette alimentation de la charge à la transmission des données numériques en découpant la tension alternative à une fréquence supérieure à la fréquence de la tension alternative.

De façon générale, la présente invention se base sur une observation faite par les inventeurs selon laquelle, quand on souhaite transmettre des données à une charge par la technique de courant porteur, cette charge présente très souvent une impédance d'entrée capacitive ou, plus généralement, ne prélève pas en permanence de l'énergie sur le secteur. En particulier, quand on souhaite transmettre des informations numériques, la charge est la plupart du temps alimentée à partir d'une tension sensiblement continue, généralement issue d'un redressement, même si cette tension continue est ensuite retransformée en tension discontinue (par exemple, par un convertisseur à découpage). Il en découle que la charge est souvent associée à un moyen de stockage d'énergie qu'elle ne prélève que cycliquement sur le secteur.

Plus particulièrement, la présente invention prévoit un procédé de transmission de données sur une ligne d'alimentation alternative d'une charge à alimenter cycliquement, consistant à organiser un découpage de la tension d'alimentation alternative selon un codage des données à transmettre et hors des périodes cycliques d'alimentation de la charge en utilisant la tension d'alimentation alternative comme enveloppe d'impulsions de fréquence supérieure.

Selon un mode de réalisation de la présente invention, la fréquence de l'alimentation alternative est relativement basse par rapport à la fréquence relativement élevée de découpage pour la transmission des données.

Selon un mode de réalisation de la présente invention, le procédé consiste à organiser le découpage de la tension d'alimentation alternative, une alternance sur deux.

Selon un mode de réalisation de la présente invention, le procédé consiste à organiser le découpage de la tension d'alimentation alternative à chaque alternance, pendant la portion décroissante de l'alternance.

La présente invention prévoit également un émetteur de données numériques sur une ligne d'alimentation alternative d'une charge à alimenter cycliquement, comportant un moyen de commutation propre à interrompre la ligne d'alimentation alternative selon un codage des données numériques à transmettre en utilisant la tension d'alimentation alternative comme enveloppe d'impulsions de fréquence supérieure, le moyen de commutation étant commandé hors des périodes cycliques d'alimentation de la charge.

Selon un mode de réalisation de la présente invention, l'émetteur comporte un élément à conduction unidirectionnelle en parallèle avec le moyen de commutation.

La présente invention prévoit également un récepteur de données numériques transmises sur une ligne d'alimentation alternative d'une charge à alimenter cycliquement, le récepteur comportant des moyens pour prélever les données numériques transmises de la tension d'alimentation de la charge et les données étant constituées par un découpage, hors des périodes cycliques d'alimentation de la charge, de la tension d'alimentation alternative selon un codage prédéterminé.

Selon un mode de réalisation de la présente invention, le récepteur est associé à un condensateur propre à fournir une tension approximativement continue à un circuit d'alimentation de la charge, et il comporte un moyen de conduction unidirectionnel propre à isoler le condensateur des moyens d'extraction des données numériques.

La présente invention prévoit en outre un signal alternatif, d'alimentation d'une charge, comportant des périodes de fourniture d'énergie à la charge et des périodes de transmission de données numériques par découpage du signal à une fréquence supérieure à celle du signal alternatif.

Selon un mode de réalisation de la présente invention, la fréquence du signal alternatif est basse par rapport à la fréquence de découpage codant les données numériques.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 représente, de façon très schématique, un système de transmission de données sur une ligne d'alimentation alternative selon la présente invention ;
la figure 4 illustre, sous forme de chronogramme, un premier mode de mise en oeuvre d'un procédé de transmission de données sur une ligne d'alimentation alternative selon la présente invention ;
la figure 5 illustre, sous forme de chronogramme, un deuxième mode de mise en oeuvre du procédé de transmission de données sur une ligne d'alimentation alternative selon la présente invention ;
la figure 6 représente un premier mode de réalisation d'un émetteur de données numériques sur une ligne d'alimentation alternative selon la présente invention ;
la figure 7 représente un deuxième mode de réalisation d'un émetteur de données numériques sur une ligne d'alimentation alternative selon la présente invention ;
la figure 8 représente un premier mode de réalisation d'un récepteur de données numériques véhiculées par une ligne d'alimentation alternative selon la présente invention ;
les figures 9A à 9C illustrent, sous forme de chronogrammes, le fonctionnement du récepteur de la figure 8 mettant en oeuvre le mode illustré par la figure 4 ; et
la figure 10 représente un deuxième mode de réalisation d'un récepteur de données numériques véhiculées par une ligne d'alimentation alternative selon la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite.

La figure 3 représente, de façon très schématique, un système de transmission de données numériques sur une ligne d'alimentation alternative d'une charge (Q) au moyen d'une tension alternative Vac de fréquence relativement basse, par exemple, la tension alternative du secteur. Le système de l'invention comporte, côté charge 4, un module récepteur 10 relié, par deux conducteurs (phase 2 et neutre 3) d'alimentation alternative, à un module émetteur 11 de données numériques à destination du récepteur. La tension alternative Vac est appliquée entre deux bornes 5, 6 en amont du module émetteur 11. Dans l'exemple représenté en figure 3, le module émetteur 11 n'est pas raccordé au neutre 3 de l'alimentation alternative. Toutefois, dans la plupart des cas pratiques, le module émetteur 11 comporte une connexion (non représentée en figure 3) au neutre de l'alimentation alternative d'où il tire sa propre alimentation.

Le module émetteur 11 délivre une tension Vt à transmettre sur la ligne d'alimentation alternative. Cette tension Vt correspond au signal de transmission de l'invention, c'est-à-dire que la tension Vt alterne, cycliquement, des périodes de transmission d'énergie à la charge 4 dans lesquelles la tension Vac n'est pas modifiée et des périodes de transmission de données dans lesquelles la tension Vac est découpée à une fréquence relativement élevée par rapport à la fréquence de la tension Vac de manière à coder les données numériques.

Fonctionnellement et de manière simplifiée, le module émetteur 11 se comporte comme un commutateur interrompant une des lignes (ici, la phase 2) de l'alimentation alternative à une fréquence relativement élevée pour disposer, pendant les périodes de transmission de données, d'une succession de niveaux hauts et bas correspondant au message à transmettre.

Côté charge 4, le module récepteur 10 présente plusieurs caractéristiques. Tout d'abord, ce module 10 comprend des moyens de réception des données transmises par découpage de la tension Vac, et des moyens de traitement de ces données adaptés à l'application concernée. De plus, la récupération des données, côté module récepteur 10, ne doit pas s'effectuer au détriment de l'alimentation de la charge. En d'autres termes, la tension Vout d'alimentation de la charge ne doit pas être altérée par la transmission de données. Il en découle que, de préférence, la tension Vout d'alimentation de la charge correspond à une tension obtenue par accumulations successives et cycliques, par exemple au moyen d'un condensateur, de l'énergie véhiculée par la ligne d'alimentation alternative pendant les périodes où celle-ci ne transmet pas de données.

Ainsi, la présente invention s'applique de préférence à un système de transmission dans lequel la charge présente une impédance capacitive et est préférentiellement alimentée à partir d'une tension approximativement continue obtenue par redressement d'une tension alternative, c'est-à-dire utilisant un moyen de stockage d'énergie (généralement un condensateur) pour ne prélever de l'énergie sur l'alimentation alternative que cycliquement.

On notera toutefois que la mise en oeuvre de la présente invention peut présenter un intérêt dans des applications à d'autres charges à alimenter. Il s'agit, par exemple, de charges organisées (par exemple, par des moyens de commutation) pour ne prélever de l'énergie que cycliquement sur la ligne d'alimentation alternative même si cette charge est dépourvue d'impédance d'entrée capacitive.

La figure 4 illustre, sous forme de chronogramme, un premier mode de mise en oeuvre de la présente invention dans lequel la transmission des données numériques s'effectue, à chaque alternance de la tension alternative Vac, dans la portion décroissante de la tension alternative. La figure 4 représente un exemple d'allure de la tension Vt transmise sur la ligne 2, 3 (figure 3) d'alimentation alternative entre le module émetteur 11 et le module récepteur 10. Ce mode de mise en oeuvre s'applique, plus particulièrement, au cas où la charge est alimentée à partir d'une tension Vout approximativement continue obtenue par redressement de la tension Vt et par stockage dans un condensateur. L'accumulation d'énergie dans le condensateur d'alimentation de la charge est organisée à chaque alternance pendant la partie croissante (A) de la tension. A partir du sommet de l'alternance (instant ts), la tension Vt devient inférieure à l'énergie stockée dans le condensateur et celui-ci sert à alimenter la charge. La partie décroissante (B) de l'alternance est donc libre pour transmettre des données numériques. Pour garantir un fonctionnement correct du système de transmission de l'invention, il suffit que le condensateur et la charge soient adaptés pour que la décharge du condensateur soit moins rapide que la décroissance de la tension d'alimentation alternative, ce qui est pratiquement toujours le cas.

La fréquence de découpage de la tension Vac pendant les périodes de transmission de données dépend de nombreux paramètres parmi lesquels la vitesse de commutation du module émetteur 11, les données à transmettre (en particulier, le volume de données) et la fréquence que peut supporter le module récepteur 10. De préférence, la fréquence de découpage est supérieure au moins au double de la fréquence de la tension Vac. Pour augmenter encore le débit, cette fréquence de découpage est encore supérieure tout en restant compatible avec le seuil de réception comme on le verra par la suite.

La figure 5 illustre, par un chronogramme représentant un exemple d'allure de la tension Vt, un deuxième mode de mise en oeuvre de la présente invention. Selon ce deuxième mode de mise en oeuvre, on utilise une alternance sur deux pour la transmission d'énergie destinée à l'alimentation de la charge et une alternance sur deux pour la transmission de données. Ce mode de mise en oeuvre est plus particulièrement destiné à une charge associée à un condensateur propre à stoker une énergie suffisante pour n'avoir recours à un appoint de tension prélevée sur l'alimentation alternative qu'une alternance sur deux. Dans l'exemple illustré par la figure 5, les alternances positives (A') sont utilisées pour fournir de l'énergie à la charge tandis que les alternances négatives (B') sont utilisées pour transmettre les données numériques selon l'invention.

Selon un autre mode de transmission (non représenté) où la charge a des besoins en énergie plus espacés, on peut prévoir d'utiliser plusieurs alternances successives pour la transmission de données puis une ou plusieurs alternances pour la fourniture d'énergie. À l'inverse, pour un faible volume de données et pour une charge ne supportant pas une interruption trop fréquente de son alimentation en énergie, on peut espacer les périodes de transmission de données.

Toutefois, les deux modes de mise en oeuvre illustrés par les figures 4 et 5 présentent l'avantage de permettre une distinction simple des périodes d'alimentation et de transmission comme on le verra par la suite.

Quel que soit le mode de mise en oeuvre utilisé, on notera que les données sont transmises sur la ligne d'alimentation alternative sous la forme d'une succession de 0 et 1 correspondant, respectivement, à une tension Vt nulle et à une tension Vt différente de zéro. Tout mode de codage de données numériques compatible avec une telle transmission peut être utilisé dans une transmission de données selon la présente invention. Par exemple, on pourra envoyer une trame de données selon un protocole de transmission du type connu sous la dénomination RS232.

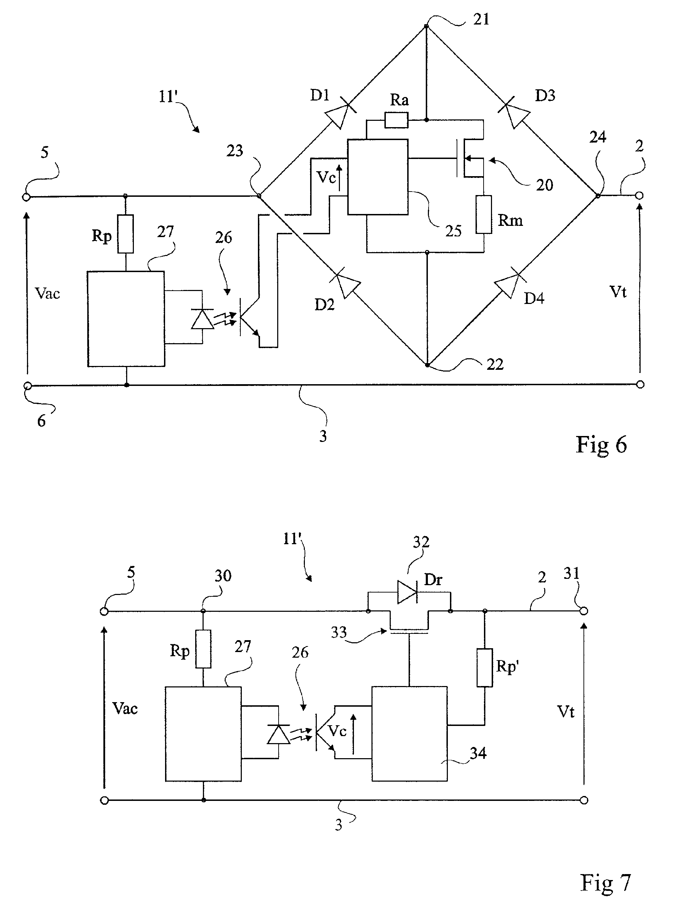

La figure 6 représente un premier mode de réalisation d'un module émetteur 11', plus particulièrement destiné au premier mode de mise en oeuvre de la transmission de données illustré par la figure 4.

Selon ce premier mode de réalisation, on utilise un interrupteur 20 (ici, un transistor MOS) connecté en série avec une résistance de mesure Rm entre deux bornes 21, 22 de sortie redressée d'un pont de diodes D1, D2, D3 et D4. Une première borne alternative 23 du pont est connectée à la borne 5 (par exemple, la phase) de l'alimentation alternative Vac tandis qu'une deuxième borne alternative 24 du pont constitue une borne de sortie délivrant la tension Vt à transmettre sur la ligne d'alimentation alternative. L'autre conducteur (neutre 3) de l'alimentation alternative n'est ici pas interrompu. Le transistor 20 est commandé par un circuit 25 connecté entre la borne 22 et, par l'intermédiaire d'une résistance d'alimentation Ra, la borne 21.

Le circuit 25 reçoit une tension de commande Vc indicatrice des périodes où l'interrupteur 20 doit être fermé, respectivement ouvert. Le circuit 25 a pour rôle d'adapter le niveau de la tension Vc à la commande du transistor 20. La réalisation pratique du circuit 25 est à la portée de l'homme de l'art.

Selon l'invention, la tension de commande Vc est délivrée, de préférence par l'intermédiaire d'un optocoupleur 26 pour éviter des problèmes de potentiel de référence, par un circuit numérique 27 de commande chargé de coder les informations à transmettre sous forme de messages numériques adaptés. Le circuit 27 est, de préférence, alimenté (par exemple par l'intermédiaire d'une résistance Rp) par la tension Vac. La tension Vc de commande du circuit 25 correspond à la tension collecteur-émetteur du phototransistor de l'optocoupleur 26. La réalisation pratique d'un circuit 27 est à la portée de l'homme de l'art en fonction de l'application et des indications fonctionnelles données ci-dessus. A titre de variante, le circuit 27 peut être référencé à la borne 22 et tirer son alimentation de celle du circuit 25. Dans ce cas, l'optocoupleur 26 n'est pas nécessaire et le module émetteur n'a pas besoin de connexion au neutre 3 de sorte que seule la phase 2 est interrompue pour la connexion du module émetteur.

La figure 7 représente un deuxième mode de réalisation d'un module émetteur 11" selon la présente invention. Le module émetteur 11" est plus particulièrement destiné au mode de mise en oeuvre illustré par la figure 5, c'est-à-dire à l'utilisation des alternances, par exemple positives, pour la transmission d'énergie à destination de la charge et des alternances, par exemple négatives, pour la transmission de données numériques.

Selon ce mode de réalisation, l'émetteur 11", comporte, en parallèle entre deux bornes d'entrées 30 et de sortie 31 correspondant respectivement à la borne 5 et à la borne délivrant la tension Vt, un élément 32 à conduction unidirectionnelle (par exemple, une diode Dr) et un commutateur 33 (ici un transistor MOS). Le transistor 33 est commandé par un bloc 34 dont une borne d'alimentation est reliée, par l'intermédiaire d'une résistance Rp', à la borne 31 et dont une borne de sortie est reliée à la grille du transistor 33.

Selon l'invention, le bloc de commande 34 reçoit une tension Vc de commande représentative des périodes respectives de fermeture et d'ouverture du transistor 33. Cette tension est délivrée, de préférence par l'intermédiaire d'un optocoupleur 26, par un circuit 27 de génération du code numérique similaire à celui illustré en relation avec la figure 6.

On notera que la diode Dr est optionnelle. En effet, l'utilisation d'un commutateur 33 suffit si celui-ci est commandé de façon à être fermé en permanence pendant les alternances positives. Toutefois, l'utilisation d'une diode Dr en parallèle avec le commutateur 33 constitue un mode de réalisation préféré dans la mesure où le commutateur n'est alors pas traversé par le courant d'alimentation de la charge et peut donc être dimensionné en fonction du courant lié exclusivement à la transmission de données. En variante, si le commutateur est constitué d'un transistor MOS, la diode Dr peut alors être constituée par la diode intrinsèque du transistor MOS.

En outre, le recours à une diode Dr permet, en particulier, de simplifier la commande opérée par le circuit 27 qui peut alors délivrer, pour chaque alternance de la tension Vac, les données numériques. Celles-ci ne sont toutefois transmises qu'une alternance sur deux grâce à la diode Dr et ce quelle que soit la commande opérée sur le commutateur 33.

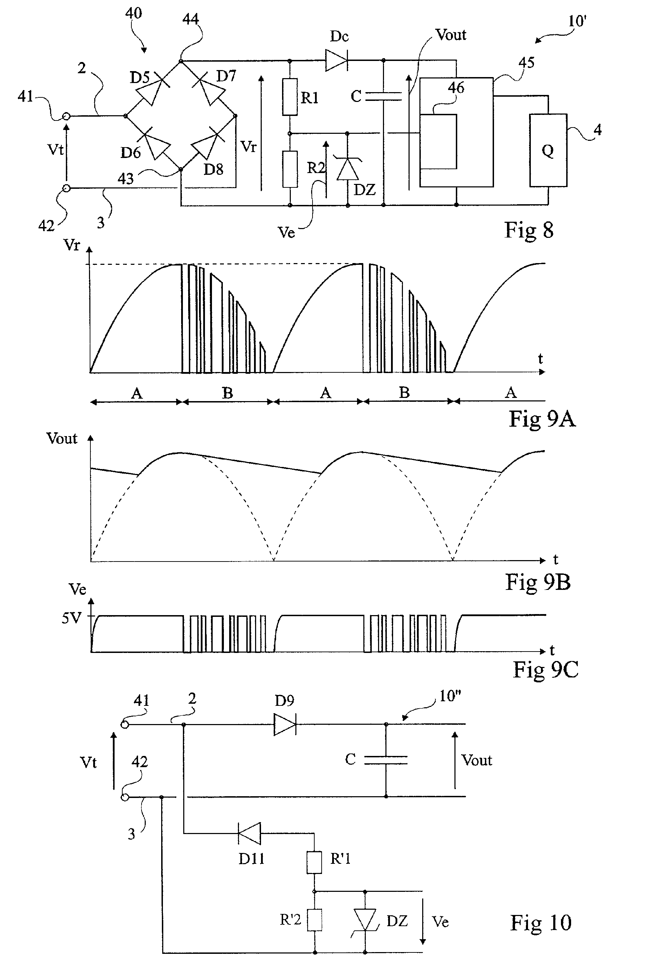

La figure 8 représente un premier mode de réalisation d'un module récepteur 10' selon la présente invention. Ce module récepteur 10' correspond à un circuit d'alimentation d'une charge dont l'impédance d'entrée capacitive est définie par un condensateur de stockage C et s'applique plus particulièrement à la réception de données transmises selon le premier mode de mise en oeuvre (figure 4).

Ce circuit comporte un pont 40 de diodes D5, D6, D7 et D8 dont deux bornes d'entrée sont connectées à deux bornes 41, 42 d'application de la tension alternative Vt délivrée par un module émetteur selon l'invention, par exemple tel qu'illustré par la figure 6.

Une première borne 43 de sortie du pont 40 constitue une borne de potentiel de référence du circuit 10'. Une deuxième borne 44 de sortie du pont 40 a pour objet de délivrer, à l'aide d'un condensateur C, une tension d'alimentation approximativement continue Vout à un circuit 45 servant à alimenter la charge 4.

Une caractéristique d'un récepteur propre à fonctionner avec un émetteur de la présente invention est qu'il comporte des moyens pour préserver une tension Vout sensiblement continue aux bornes du condensateur C, indépendamment des variations imposées par l'émetteur, sur la tension Vt, pendant les périodes de transmission de données.

Dans l'exemple représenté à la figure 8, le module 10' comprend une diode Dc en série avec le condensateur C entre les bornes 44 et 43 de sortie redressée du pont, l'anode de la diode Dc étant connectée à la borne 44 et la tension approximativement continue Vout étant prélevée aux bornes du condensateur C.

Le rôle de la diode Dc, ou d'un élément à conduction unidirectionnelle analogue, est d'autoriser un prélèvement de la tension alternative redressée Vr, avant que celle-ci soit filtrée par le condensateur C. Cela est, selon l'invention, indispensable pour extraire de la tension alternative Vt fournie par l'émetteur, les données numériques véhiculées par les demi-alternances décroissantes (figure 4).

Dans le mode de réalisation représenté par la figure 8, la tension Vr de sortie du pont 40, prélevée entre les bornes 44 et 43, est appliquée à deux extrémités d'un pont diviseur de tension constitué, par exemple, de deux résistances R1 et R2 associées en série. Ce pont diviseur est destiné à limiter le courant et à extraire, de la tension alternative redressée Vr et pendant les périodes de transmission de données, une basse tension correspondant aux données numériques transmises dans la partie de l'alternance laissée libre par l'alimentation de la charge. De préférence, une diode Zener Dz, connectée en parallèle sur la résistance R2, écrête cette basse tension en amplitude et permet d'adapter les données à un niveau compatible avec un bloc 46 d'exploitation des données numériques contenu, par exemple, dans le circuit 45. Il pourra s'agir, par exemple, d'un microcontrôleur, la diode Dz ayant une tension seuil adaptée aux niveaux logiques que peut recevoir ce microcontrôleur.

On notera que tout autre moyen équivalent à un abaisseur de tension pourra être utilisé à la place du pont diviseur résistif. Toutefois, l'utilisation de résistances constitue un mode de réalisation préféré eu égard à la simplicité de ce mode de réalisation. De même, d'autres moyens à conduction unidirectionnelle pourront être utilisés à la place de la diode Dc qui constitue cependant un mode de réalisation préféré en raison de sa simplicité.

A titre de variante, la diode Zener Dz ou tout autre moyen d'écrêtage analogue est utilisé sans pont diviseur ou moyen abaisseur de tension analogue. Le courant est toutefois de préférence limité, par exemple, en conservant la résistance R1.

Le fonctionnement d'un module récepteur 10' tel que représenté à la figure 8 est illustré par les figures 9A à 9C qui représentent, sous forme de chronogrammes, un exemple d'allures des tensions Vr, Vout et Ve aux bornes de la diode Dz, pour une tension Vt telle qu'illustrée par la figure 4.

L'allure de tension de la figure 9A correspond à la tension Vt redressée.

Comme l'illustre la figure 9B, grâce à la diode Dc et au dimensionnement du condensateur C, ce dernier alimente la charge Q et le circuit 45 pendant chaque décroissance de la tension Vr. Ainsi, la tension Vout est maintenue à un niveau sensiblement continu bien que la tension Vr subisse des variations pendant les périodes décroissantes de chaque alternance.

La tension Ve (figure 9C), récupérée aux bornes de la diode Dz, est à un niveau haut (par exemple, 5 volt) pendant toutes les portions croissantes de l'alternance et reproduit, par une succession de niveaux hauts (5 volts) et bas (0 volt) le découpage présent sur la tension Vr pendant les portions décroissantes.

On notera que la quasi-totalité (en durée) de la portion décroissante (B) de l'alternance peut être utilisée pour transmettre des données. En effet, en prenant pour exemple une tension secteur de 220 volts à une fréquence de 50 Hz, celle-ci n'atteint, par sa décroissance naturelle, un niveau inférieur à 5 volts que 52 microsecondes avant son passage par zéro. Par conséquent, la fenêtre de temps disponible pour la transmission sera, à chaque demi-alternance, de 5 millisecondes moins 52 microse-condes, soit environ 4,9 millisecondes toutes les 10 millisecondes. Pour une tension secteur de 110 volts à une fréquence de 60 Hz, ce niveau est atteint 86 microsecondes avant le passage par zéro et la fenêtre de transmission disponible est au maximum de l'ordre de 4 millisecondes.

On notera toutefois que, même si on doit prendre garde à la décroissance du niveau de tension en fin d'alternance (en particulier, en raison du système abaisseur de tension éventuel) et réduire par conséquent la durée de la trame de données transmise, cette réduction de durée est parfaitement négligeable devant la durée disponible pour la transmission des données. Comme cela a été indiqué précédemment, cela peut le cas échéant conditionner la fréquence de découpage de la tension Vac.

La détection du début de chaque message numérique sur la tension Ve s'effectuera, par exemple, par une détection côté récepteur du passage par un maximum de la tension alternative Vr ou par un code spécifique transmis en chaque début de trame d'émission.

De préférence, côté émetteur, les trames numériques sont transmises à partir d'un microcontrôleur synchronisé sur la tension Vac de façon à n'émettre que pendant les périodes autorisées.

Un avantage de la présente invention est qu'elle s'affranchit du problème de basse impédance des lignes des systèmes à courant porteur. En effet, en utilisant les périodes de la tension alternative qui sont laissées libres par l'alimentation de la charge proprement dite, la transmission de données s'effectue alors que la ligne d'alimentation présente, côté charge, une impédance élevée (par le moyen de conduction unidirectionnel qui est bloqué).

Un autre avantage de la présente invention est que la transmission de la trame de données numériques s'effectue alors de manière presque non dissipative sans pour autant introduire de problème d'atténuation de ligne ni de récupération de signaux de faible amplitude.

C'est pourquoi il est, selon l'invention, possible de découper la tension d'alimentation directement bien que celle-ci soit généralement d'une amplitude élevée (environ 300 volts crête pour une alimentation secteur de 220 volts et environ 160 volts crête pour une alimentation secteur de 110 volts). Cela simplifie considérablement la récupération des données numériques côté module récepteur.

Un autre avantage de la présente invention est qu'en transmettant les données à haute impédance, celles-ci ne sont pas atténuées et leur récupération ne nécessite aucun système de filtrage et/ou d'amplification. Le récepteur en est donc particulièrement simplifié.

La figure 10 représente un deuxième mode de réalisation d'un récepteur 10" selon la présente invention. Ce mode de réalisation est plus particulièrement destiné à une séparation temporelle des périodes de transmission d'énergie et de transmission de données une alternance sur deux (figure 5).

Selon ce mode de réalisation, une diode D9 et le condensateur C sont associés en série entre les bornes 41 et 42 d'application de la tension Vt. L'anode de la diode D9 est connectée à la borne 41. On suppose ici que le condensateur C est destiné à être alimenté par les alternances positives de la tension d'alimentation.

Pour des raisons de clarté, les circuits d'exploitation de la tension Vout et la charge ainsi que le circuit d'exploitation des données transmises Ve n'ont pas été représentés à la figure 10.

Selon ce deuxième mode de réalisation, les trames de données numériques sont prélevées en amont de la diode D9. La cathode d'une diode D11 est connectée à la borne 41 et son anode alimente un pont diviseur résistif constitué de résistances R'1, R'2 en série, l'extrémité libre du pont résistif étant connectée à la borne 42. Une diode Zener Dz est connectée en parallèle sur la résistance R'2 et la tension représentative des données numériques Ve est prélevée aux bornes de cette diode Dz.

Ce mode de réalisation requiert que les conducteurs 2, 3 de transmission de la tension Vt soient repérés entre l'émetteur et le récepteur afin d'effectuer un branchement respectant la polarité des alternances. Toutefois, ce mode de réalisation présente l'avantage d'effectuer une récupération par la diode D11 uniquement des données transmises par les alternances négatives. Par conséquent, il n'est par nécessaire de prévoir, côté récepteur des données numériques, de moyens pour éliminer le niveau de tension reçu pendant les alternances positives.

Les applications du système de transmission de données numériques sur une ligne d'alimentation alternative en appliquant la solution proposée par la présente invention sont multiples.

Par exemple, on pourra utiliser un tel système de transmission de données numériques pour commander un système d'éclairage pourvu de plusieurs sources lumineuses fluorescentes alors même qu'on ne dispose que d'une même ligne d'alimentation alternative depuis un interrupteur. Dans ce cas, les informations numériques sont utilisées pour sélectionner la ou les sources lumineuses du système, ainsi que, le cas échéant, leurs intensités lumineuses respectives.

Dans un tel domaine d'application, la présente invention trouve un intérêt plus particulier dans la modification d'installations électriques existantes dans la mesure où elle ne nécessite aucun passage de fil supplémentaire.

Plus généralement, la présente invention peut être mise en oeuvre dans toute installation électrique pour véhiculer des informations sur des lignes d'alimentation alternative. Il peut s'agir, par exemple, de commandes électriques de volets ou autres fermetures.

Bien entendu, la présente invention est susceptible de diverses variantes et modifications qui apparaîtront à l'homme de l'art. En particulier, le choix du mode de mise en oeuvre (partie d'alternance, une alternance sur deux, plusieurs alternances successives) pour la périodicité de transmission des données dépend de l'application et, en particulier, des besoins énergétiques de la charge en liaison avec les moyens de stockages éventuels auxquels elle est associée. De plus, la fréquence de découpage de la tension alternative est adaptée au mode de transmission des données numériques et au volume de données à transmettre. En outre, d'autres moyens d'émission-réception que ceux décrits à titre d'exemple pourront être prévus pourvu qu'ils respectent les fonctionnalités décrites. À cet égard, on notera que le dimensionnement des différents composants des émetteurs-récepteurs ci-dessus est à la portée de l'homme du métier en fonction de l'application et à partir des indications fonctionnelles indiquées. En particulier, on veillera à sélectionner un moyen de commutation pour découper la tension alternative d'alimentation qui soit adaptée à la fréquence d'horloge des données transmises. A titre d'exemple, on pourra prévoir une fréquence d'horloge de l'ordre de 100 kHz, ce qui est parfaitement compatible avec les moyens de commutation haute tension existants. On obtient dans ces conditions un débit équivalent à 100 kbits par seconde.

## Revendications

1. Récepteur (10, 10', 10") de données numériques transmises sur une ligne (2, 3) d'alimentation alternative d'une charge à alimenter cycliquement, comportant des moyens (R1, R2, Dz ; D11, R'1, R'2, Dz) pour prélever les données numériques transmises de la tension (Vr) d'alimentation de la charge, les données étant constituées par un découpage de la tension d'alimentation alternative (Vac) en utilisant cette tension comme enveloppe d'impulsions de fréquence supérieure selon un codage prédéterminé et hors de périodes cycliques (A, A') d'alimentation de la charge.

2. Récepteur selon la revendication 1, **caractérisé en ce qu'**il est associé à un condensateur (C) propre à fournir une tension approximativement continue (Vout) à un circuit (45) d'alimentation de la charge, et **en ce qu'**il comporte un moyen de conduction unidirectionnel (Dc, D9) propre à isoler le condensateur (C) des moyens d'extraction des données numériques.

## Patentansprüche

1. Ein Empfänger (10, 10', 10") für digitale Daten, die über eine AC Spannungsversorgungsleitung (2, 3) einer Last, die zyklisch mit Leistung versorgt wird, gesendet werden, wobei der Empfänger Mittel (R1, R2, D_{z}; D11, R'1, R'2, D_{z}) aufweist, zum Abrufen der gesendeten Daten von der Last Versorgungsspannung (Vr) und wobei die Daten durch ein Schalten der AC Spannungsversorgung (Vac), ausserhalb der zyklischen Last Versorgungsperioden (A, A'), gebildet werden, unter Verwendung dieser Spannung als eine Einhüllende für Pulse mit einer höheren Frequenz entsprechend einer vorbestimmten Kodierung.

2. Der Empfänger nach Anspruch 1, **dadurch gekennzeichnet, dass** er mit einem Kondensator (C) assoziiert ist, der geeignet ist eine angenäherte DC Spannung (Vout) für einen Lastversorgungsschaltkreis (45) bereitzustellen, und dadurch, dass er ein Einbahn-Verbindungsmittel (Dc, D9) aufweist, das geeignet ist den Kondensator (C) von den Mitteln zum Extrahieren der digitalen Daten zu isolieren.

## Claims

1. A receiver (10, 10', 10") of digital data transmitted over an A.C. power supply line (2, 3) of a load to be cyclically powered, the receiver including means (R1, R2, Dz; D11, R'1, R'2, Dz) for fetching the transmitted digital data from the load supply voltage (Vr) and the data being formed by a switching, outside the cyclic load supply periods (A, A'), of the A.C. supply voltage (Vac) using this voltage as an envelope for pulses having a higher frequency according to a predetermined coding.

2. The receiver of claim 1, **characterized in that** it is associated with a capacitor (C) adapted to providing an approximately D.C. voltage (Vout) to a load supply circuit (45), and **in that** it includes a one-way conduction means (Dc, D9) adapted to isolating the capacitor (C) from the means of extraction of the digital data.
